# EUROPÄISCHE PATENTSCHRIFT

(11) **EP 0 918 682 B1**
(45) Veröffentlichungstag und Bekanntmachung des Hinweises auf die Patenterteilung: **06.12.2000**
(21) Anmeldenummer: 97936592.1
(22) Anmeldetag: 05.08.1997
(51) Int. Cl.: B62D 25/08, B62D 25/14

(54) **KRAFTFAHRZEUG MIT EINEM WASSERKASTEN- UND EINEM ARMATURENTAFELMODUL**
MOTOR VEHICLE WITH AN AIR DIFFUSER MODULE AND A DASHBOARD MODULE
VEHICULE AUTOMOBILE POURVU D'UN MODULE DIFFUSEUR D'AIR ET D'UN MODULE PLANCHE DE BORD

(30) Priorität: 14.08.1996 DE 19632714
(43) Veröffentlichungstag der Anmeldung: 02.06.1999
(73) Patentinhaber: ADAM OPEL AG, 65423 Rüsselsheim (DE)
(72) Erfinder: BRANDEL, Klaus, D-65205 Wiesbaden (DE)
(74) Vertreter: Bergerin, Ralf, Dipl.-Ing.
(86) Internationale Anmeldenummer: DE9701642
(87) Internationale Veröffentlichungsnummer: WO9806618

(56) Entgegenhaltungen:
- EP-A- 0 124 093
- EP-A- 0 338 923
- DE-A- 3 820 644
- DE-A- 4 406 989
- DE-A- 4 424 288
- DE-B- 1 106 615
- FR-A- 2 284 505
- FR-A- 2 554 408

## Beschreibung

Die Erfindung bezieht sich auf ein Kraftfahrzeug mit den im Oberbegriff des Patentanspruchs 1 angegebenen Merkmalen.

Nahezu alle Fahrzeuge sind heute mit einem im Frontbereich angeordneten Antriebsmotor ausgestattet, der nach oben von einer Motorhaube abgedeckt und mittels einer Trennwand von einer Fahrgastzelle abgeschottet ist. Im oberen Bereich der Trennwand werden sogenannte Wasserkästen angeordnet, die nach oben offen sind und im wesentlichen der Wasserseparation und der Luftführung, aber auch zur Aufnahme von Bauelementen oder Baugruppen des Fahrzeugs dienen. Fahrgastzellenseitig ist nahe der Trennwand eine Armaturentafel vorzusehen, und in der Vergangenheit wurden hier diverse Module entwickelt. Dieser Stand der Technik ergibt sich beispielsweise aus der DE 31 49 083 C2, EP 0 124 093 A2, DE 36 22 165 C2 oder auch der DE 40 40 731 C2.

Wie in der DE 40 40 731 C2 gezeigt, kann es sinnvoll sein, zwei Module getrennt voneinander vorzumontieren, da im Trennwandbereich eine enorme Vielzahl von Bauelementen und Baugruppen anzuordnen ist. Eine Montage dieser Elemente im Fahrzeug wäre zu aufwendig, und der Umfang eines einzelnen Moduls kann zu groß für eine praktische Handhabung werden.

Die DE 40 40 731 C2 zeigt ein Fahrzeug mit Trennwand (die Öffnungen aufweist) zwischen Motorraum und Fahrgastzelle. Es wird ein Modul, bestehend aus Wasserkasten, Scheibenwischersystem und Bremssystemelementen und ein weiteres Modul mit Armaturentafel, Lenkung und weiteren Aggregaten vormontiert.

Da im Motorraum und in der Fahrgastzelle völlig verschiedene Bedingungen herrschen, ist eine gute Abschottung von großer Bedeutung. Eine Trennwand muß möglichst eine luft-, flüssigkeits- und schalldichte, aber auch eine mechanisch beanspruchbare Abtrennung darstellen. Es fanden bereits beschichtete Flächenelemente und auch Sandwichplatten Anwendung.

Eine besondere Problematik besteht im Bereich von notwendigen Öffnungen der Trennwand zum Durchtritt von Bauelementen (Gestänge, Leitungen etc.). Auch hier ist eine vollständige Abdichtung vonnöten. Bestimmte Bauelemente können oder sollen nicht in der Fahrgastzelle untergebracht werden, obwohl dort die für diese Bauelemente notwendigen Bedingungen herrschen. Sie werden im Motorraum aufwendig gekapselt angeordnet.

Es ist Aufgabe der Erfindung, den Bereich eines Kraftfahrzeugs, der zwischen Motorraum und Fahrgastzelle liegt, derart zu gestalten, daß eine Fahrzeugmontage mit geringem Aufwand möglich ist, Bauelemente und Baugruppen optimiert anzuordnen sind, eine allen Anforderungen entsprechende Dichtheit zwischen Motorraum und Fahrgastzelle besteht und somit auch eine optimierte mechanische Belastbarkeit dieses Bereiches besteht.

Zur Lösung dieser Aufgabe zeichnet sich das Kraftfahrzeug nach der Erfindung durch die im Anspruch 1 angegebenen Merkmale aus, wobei sich weitere Einzelheiten aus den Ansprüchen 2 bis 11 ergeben.

Es wird bei dem erfindungsgemäßen Kraftfahrzeug keine Trennwand mehr zwischen Motorraum und Fahrgastzelle eingesetzt, sondern es wird ein dritter Raum - der von einem Wasserkasten gebildete, sehr tief hinunterreichende Raum - als Trennraum eingeführt. Somit besteht mit dem Trennraum ein weiterer Raum im Kraftfahrzeug, in dem gewünschte Bedingungen geschaffen werden können. Von besonderem Vorteil ist, daß eine doppelwandige Abschottung der Fahrgastzelle vom Motorraum besteht. In dem Trennraum können Bauelemente und Baugruppen des Kraftfahrzeugs untergebracht werden, wobei diese ohne zusätzliche Maßnahmen sowohl vom Motorraum als auch von der Fahrgastzelle abgeschottet sind. Die direkten Verbindungsöffnungen zwischen Motorraum und Fahrgastzelle existieren prinzipiell nicht mehr, da die meisten Verbindungen nur entweder vom Motorraum in den Trennraum oder von der Fahrgastzelle in den Trennraum geführt werden müssen.

Der bis in den Bereich einer unteren Rahmenstruktur des Fahrzeugs reichende Wasserkasten kann eine unregelmäßige Querschnittsfläche aufweisen, die beispielsweise eine U- oder auch V-förmige Form hat. Der obere Verschluß des Wasserkastens erfolgt durch eine Abdeckung und/oder die Motorhaube. Der Wasserkasten kann untere und/oder seitliche Flansche zur Anbindung an die Fahrzeugstruktur aufweisen.

Diverse Bauelemente, Baugruppen und/oder Aggregate können im Wasserkasten angeordnet werden. Seine Wandungen können dabei Ausbuchtungen in Richtung Fahrgastzelle, Motorraum oder auch in Richtung des Wasserkasteninneren aufweisen. Als unter- bzw. anzubringende Baugruppen kommen beispielsweise in Betracht:
- ein Bremsgerät mit Betätigungselementen,
- Pedale für Kupplung, Bremse sowie Fahrpedal mit Pedalböcken,
- Komponenten einer Heizungs- und Belüftungs- bzw. Klimaanlage,
- Komponenten einer Scheibenwischeranlage,
- Komponenten einer elektrischen Anlage des Fahrzeugs.

Von Vorteil ist es, wenn das Bremsgerät, welches im allgemeinen rotationssymmetrisch gestaltete Bauelemente (Topfgehäuse des pneumatischen Bremskraftverstärkers) umfaßt, im Gegensatz zur Anordnung nach dem Stand der Technik mit etwa quer zur Fahrtrichtung ausgerichteter Symmetrieachse im Wasserkasten angeordnet wird. So ist die Baugröße in Fahrtrichtung geringer als bei Anordnung mit in Fahrtrichtung gelegener Symmetrieachse. Gleichzeitig wird die Bildung von Crashbrücken vermieden.

Das außerhalb des Kraftfahrzeugs vormontierte Wasserkastenmodul kann mit geringem Aufwand als Trennraum an der Fahrzeugkarosserie montiert werden und dabei eine tragende bzw. stabilisierende Funktion ausüben. So kann ein Fahrzeugquerträger entfallen oder mit nur geringem Querschnitt ausgeführt werden. Auch ein Scheibenquerträger (Auflage für Windschutzscheibe) kann Teil des Wasserkastenmoduls sein. Die Wandungen des Wasserkastens können aus Tiefziehteilen, aus ebenen Blechteilen oder aus Strangpreßprofilen sowie auch aus Kunststoffformteilen gebildet werden und wenn nötig beschichtet (Schalldämmung) sein. Sie tragen die im bzw. am Wasserkasten zu halternden Bauelemente und Baugruppen, wobei an oberen Kanten der Wandungen auch Dichtungen zur Motorhaube vorgesehen sein können.

Der Wasserkasten wird seitlich (im Bereich von Federbeindomen) und/oder unten an der Karosserie befestigt, was durch Kleben, Schrauben oder auch Schweißen erfolgt. Entsprechend geformte Flansche können an den Wandungen des Wasserkastens vorgesehen sein.

Ein vormontiertes Armaturentafelmodul wird fahrgastzellenseitig an der Karosserie und/oder am Wasserkastenmodul gehaltert. So sind auch Bauelemente des Wasserkastenmoduls mit Bauelementen des Armaturentafelmoduls (Luftleitungen, Bedienelemente ...) im Übergangsbereich der Module zu verbinden.

Details der Erfindung ergeben sich aus der folgenden Beschreibung eines Ausführungsbeispiels. Von den zugehörigen Zeichnungen zeigt:
- Fig. 1: eine perspektivische Ansicht auf eine Karosserie eines Kraftfahrzeugs gemäß der Erfindung ohne Wasserkasten- und Armaturentafelmodul;

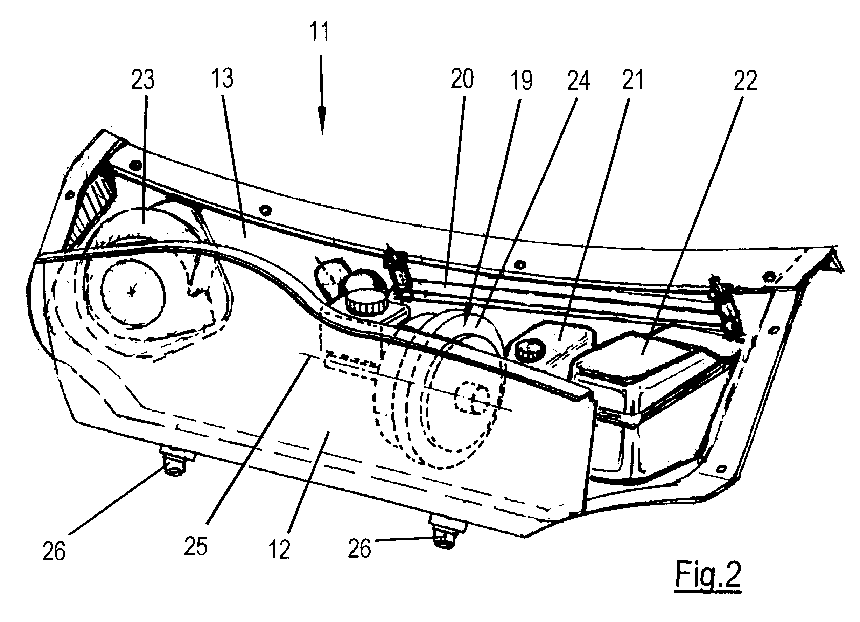

- Fig. 2.: ein Wasserkastenmodul zur Montage in der Kraftfahrzeugkarosserie gemäß Figur 1 in perspektivischer Darstellungsweise;

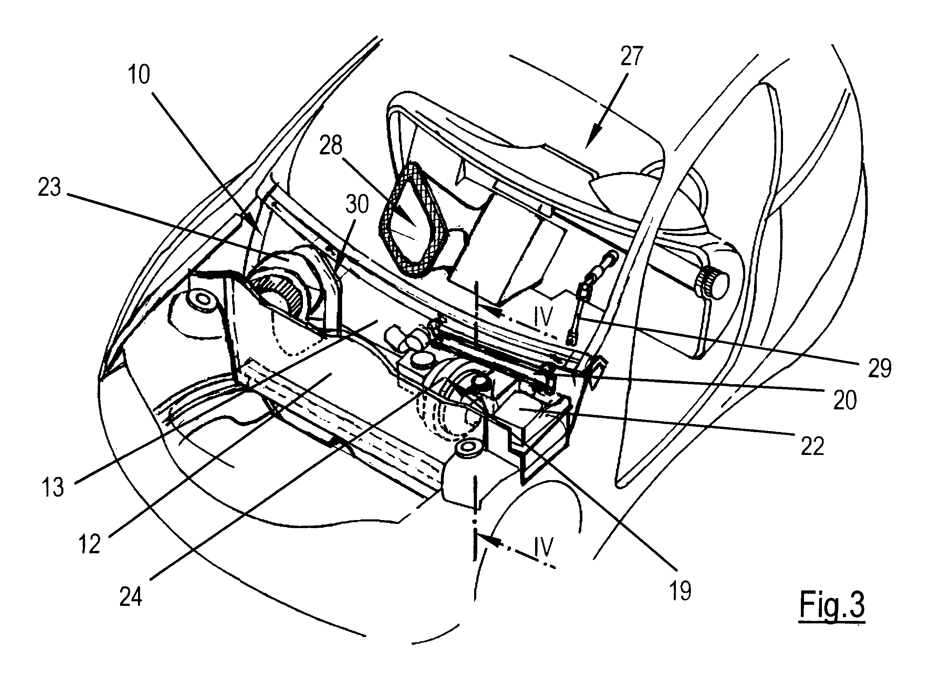

- Fig. 3: eine perspektivische Ansicht auf die Karosserie nach Figur 1 mit montiertem Wasserkastenmodul und mit in einer Vormontagestellung befindlichem Armaturentafelmodul;

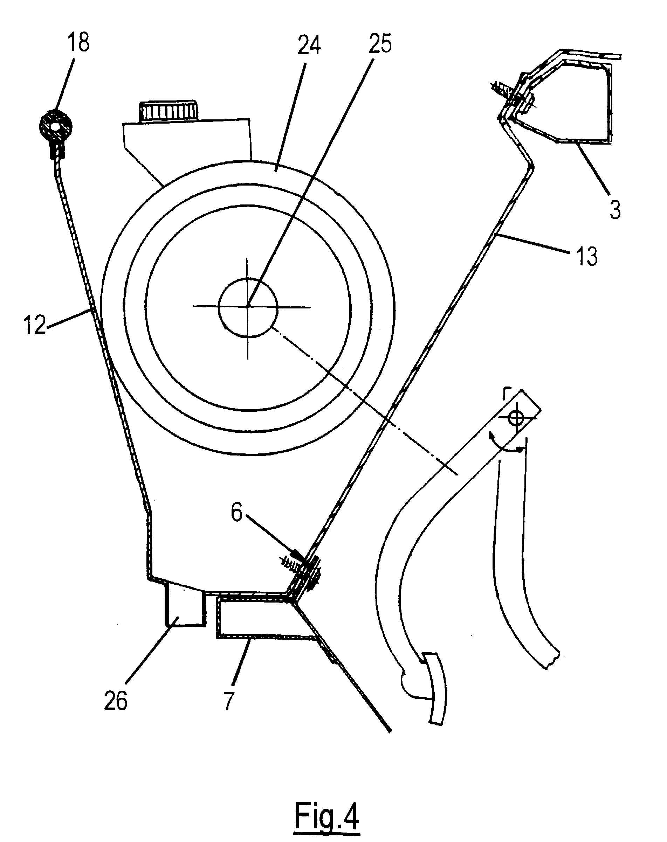

- Fig. 4: eine schematische Darstellung eines Schnittes entlang Linie IV-IV in Figur 3.

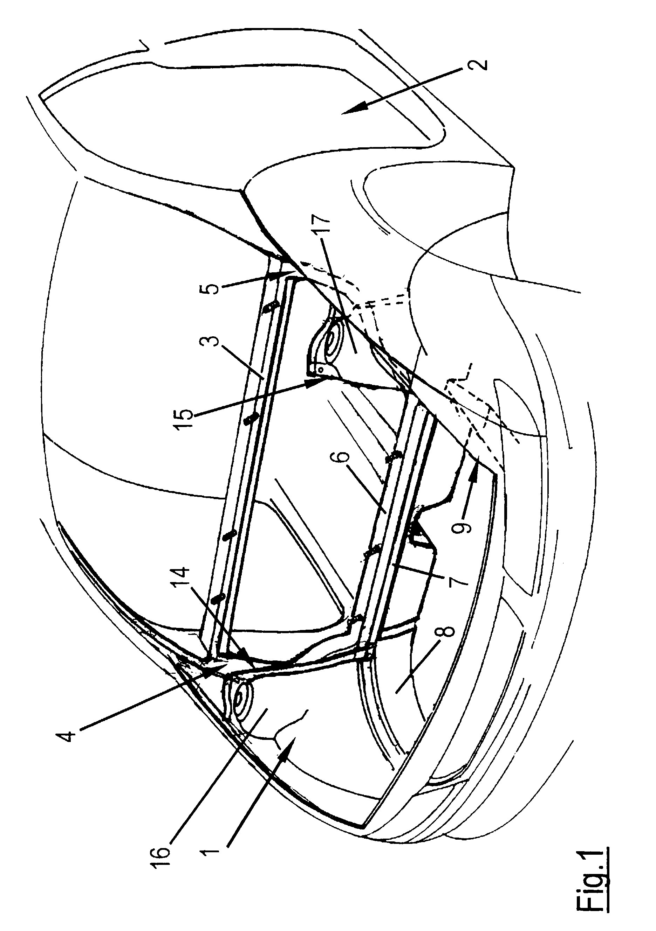

Wie aus Figur 1 ersichtlich, wird von Teilen der Kraftfahrzeugkarosserie in an sich bekannter Weise ein Motorraum 1 für einen Frontmotor und eine Fahrgastzelle 2 eingegrenzt, wobei eine Trennwand nicht Bestandteil der Karosserie ist. Eine sehr große Öffnung zwischen Motorraum 1 und Fahrgastzelle 2 wird umrandet von einem Querträger 3 mit relativ geringem Querschnitt sowie von seitlichen Flanschen 4, 5 sowie einem unteren Flansch 6. Der untere Flansch 6 liegt sehr tief im Bereich einer unteren Rahmenstruktur der Karosserie, von der auch die untere Begrenzung des Motorraumes 1 und der Fahrgastzelle 2 gebildet wird. Insbesondere sind hier ein Querträger 7 und zwei Längsträger 8, 9 als Elemente der unteren Rahmenstruktur zu benennen.

Derartige Öffnungen zwischen Motorraum 1 und Fahrgastzelle 2 wurden bislang im Stand der Technik durch eine Trennwand verschlossen. Gemäß der Erfindung wird nunmehr ein Trennraum 10 von einem die Öffnung verschliessenden Wasserkastenmodul 11 definiert. Der Trennraum 10 wird von einer vorderen Wandung 12 und einer hinteren Wandung 13 des Wasserkastenmoduls 11 begrenzt. Es erfolgt eine seitliche Anbindung des Wasserkastenmoduls 11 an die Flansche 4, 5 sowie an vordere seitliche Flansche 14, 15 und den unteren Flansch 6. Das Wasserkastenmodul 11 könnte auch seitlich verschlossen sein und flächig an seitlichen Elementen der Karosserie verschraubt und/oder verklebt werden. Federbeindome 16, 17 können - wie gezeigt - kurz vor, aber auch im Wasserkastenmodul 11 liegen. Die vordere Wandung 12 bildet die Abtrennung zwischen Motorraum 1 und Trennraum 10 und die hintere Wandung 13 bildet die Abgrenzung zwischen dem Trennraum 10 und der Fahrgastzelle 2. Beide Wandungen 12, 13 ragen bis nach oben in den Bereich einer (geschlossenen) Motorhaube, welche in den Figuren nicht gezeigt ist. Zur Abdichtung zwischen Motorhaube und Wandung 12, 13 kann die Oberkante insbesondere der vorderen Wandung 12 mit einer Dichtung 18 versehen sein. Der Querschnitt des gezeigten Wasserkastens 11 ist im wesentlichen V-förmig, könnte aber auch U-förmig gestaltet sein.

Getrennt, sowohl vom Motorraum 1 als auch von der Fahrgastzelle 2, sind diverse Bauelemente, Baugruppen und Aggregate im Wasserkastenmodul 11 angeordnet. Dies sind beispielhaft:
- ein Bremsgerät 19 mit Bremskraftverstärker;
- eine Scheibenwischeranlage 20 und Komponenten 21 einer Scheibenwaschanlage;
- Komponenten 22 (Sicherungen, Steugergeräte, eventuell auch Batterie) der elektrischen Anlage des Fahrzeugs sowie auch
- Komponenten 23 einer Heizungs- und Belüftungs- bzw. Klimaanlage.

Das Bremsgerät 19 ist im vorliegenden Fall derart im Wasserkasten 11 eingebaut, daß ein Topfgehäuse 24 mit quer zur Fahrtrichtung liegender Symmetrieachse 25 angeordnet ist. Die Bremspedalbetätigung (Pedale und Pedalböcke sind als Modulbestandteile zeichnerisch nur angedeutet) kann über einen Winkelhebel auf das Bremsgerät 19 übertragen werden, so daß das Bremsgerät 19
a) in Fahrtrichtung kürzer als bekannt ist und
b) nicht mehr als Crashbrücke wirkt (Kolbenstangen des Bremskraftverstärkers liegen jetzt quer zur Fahrtrichtung).

Einige Bauelemente, Baugruppen oder Aggregate des Kraftfahrzeugs können auch außen am Wasserkasten 11 befestigt sein. Die Wandungen 12, 13 des Wasserkastens 11 können auch in der Form bereichsweise der Form dieser Elemente angepaßt sein, also erkerförmige Ausbuchtungen in Richtung Motorraum 1, Fahrgastzelle 2 oder in Richtung des Wasserkasteninneren aufweisen. Die Form der Wandungen 12, 13 kann aber auch an die Form von Elementen des Motorraumes 1 oder Fahrgastzelle 2 angepaßt sein, die nicht am Wasserkasten befestigt sind. Beispielsweise kann der Wasserkasten 11 auch eine Einbuchtung für den Motor aufweisen. Somit ist keine zwingend kontinuierlich U- oder V-förmige Querschnittsfläche des Wasserkastens 11 vorhanden.

Im oberen Bereich des Wasserkastens 11 kann mittels an sich bekannter Abdeckungen das Eindringen grober Verunreinigungen verhindert werden und eine Wasserseparation stattfinden. Dieses Wasser sowie weiteres sich noch ganz unten im Wasserkasten 11 ansammelndes Wasser kann ohne großen Aufwand abgeleitet werden. Hierzu werden eine oder mehrere Ablauftüllen 26 vorgesehen.

Das Wasserkastenmodul 11 kann wie andere bekannte Module unabhängig vom restlichen Fahrzeug vormontiert werden, was unter ergonomisch günstigen Bedingungen erfolgt. In dem Modul 11 sind diverse Elemente enthalten, die früher mit hohem Aufwand einzeln im Fahrzeug montiert wurden. Dadurch daß das Modul 11 einen Trennraum 10 zwischen Motorraum 1 und Fahrgastzelle 2 bildet, ist eine Isolation neuer Qualität zwischen diesen Räumen 1, 2 erreichbar und auch die im Wasserkasten 11 angeordneten Elemente können separiert werden. Des weiteren sind Fahrzeuginsassen durch den Trennraum 10 besser vor mechanischer Beeinflussung zu schützen, als es mittels einer Trennwand möglich ist. Der Querträger 3, aber auch Abschnitte des Wasserkastenmoduls 11 (oberer Bereich der hinteren Wandung 13) können als Scheibenquerträger zur Abstützung einer Windschutzscheibe dienen. Die Wandungen 12, 13 des Wasserkastenmoduls 11 können aus Metall, welches auch beschichtet sein kann, oder aus Kunststoff gefertigt sein. Insbesondere die Wandung 13 zur Fahrgastzelle 2 kann als Kunststoffspritzteil ausgeführt sein. So sind ohne großen Aufwand auch Luftführungskanäle oder Anschlußstutzen einteilig zu formen.

Unabhängig vom Wasserkastenmodul 11 wird an einer separaten Montagelinie ein Armaturentafelmodul 27, welches mit der Karosserie des Kraftfahrzeugs und dem Wasserkastenmodul 11 korrespondiert, vorgefertigt. Es umfaßt im wesentlichen Lüftungskanäle 28 mit Luftklappen und Luftauslaßöffnungen einer Heizungs- und Belüftungs- bzw. Klimaanlage (kann auch weitere Komponenten dieser Anlage beinhalten), Elemente 29 einer Fahrzeuglenkung, Airbagsysteme (nicht dargestellt) sowie Bedien- und Anzeigeelemente (nicht dargestellt). Eine Verbindung von Elementen des Armaturentafelmoduls 27 mit Elementen des Wasserkastenmoduls 11 kann bei der Fahrzeugmontage notwendig sein. Beispielsweise sind Bauelemente und Baugruppen der Heizungs- und Belüftungs- bzw. Klimaanlage und der elektrischen Anlage des Kraftfahrzeugs sowohl im Wasserkastenmodul 11 als auch im Armaturentafelmodul 27 untergebracht. Sie werden bei oder nach der Modulmontage miteinander verbunden. Im Ausführungsbeispiel endet der Luftführungskanal 28 im Bereich der nach der Modulmontage luftdicht auf einer Öffnung 30 der Heizungs-, Belüftungs- bzw. Klimaanlage des Wasserkastenmoduls 11 liegt. Somit ist der Aufwand zur Verbindung gering.

Durchbrüche durch die Wandungen 12, 13 vom Motorraum 1 aus oder von der Fahrgastzelle 2 aus führen zu keiner unmittelbaren Aufhebung der Isolation zwischen den Räumen 1, 2, da der Trennraum 10 als Puffer wirkt. Die Anzahl der notwendigen Verbindungen zwischen Motorraum 1 und Fahrgastzelle 2 kann auf nahezu Null reduziert werden, was bei Nutzung einfacher Trennwände ganz anders ist. Verbindungen bestehen immer nur zum Trennraum 10, da dort diverse Bauelemente und Baugruppen angeordnet sind. Mit der Erfindung wird eine Verbesserung der Isolation zwischen Motorraum 1 und Fahrgastzelle 2 (Gas-, Flüssigkeits- und mechanische Isolation) erreicht, die Fahrzeugmontage erleichtert und das Crashverhalten verbessert.

## Patentansprüche

1. Kraftfahrzeug mit einem vor einer Fahrgastzelle (2) angeordneten Motorraum (1) einer Motorhaube, einer Armaturentafel sowie mit einem vor der Armaturentafel angeordneten zumindest bereichsweise von der Motorhaube abgedeckten Wasserkasten, **dadurch gekennzeichnet**, daß sich der Wasserkasten vom Bereich der geschlossenen Motorhaube aus derart weit nach unten erstreckt, daß er eine doppelwandige Trennung zwischen Fahrgastzelle (2) und Motorraum (1) und damit einen separaten Trennraum (10) bildet, daß der Wasserkasten, bestückt mit Bauelementen, Baugruppen und/oder Aggregaten des Fahrzeugs, als Wasserkastenmodul (11) vorgefertigt in einer Karosserie des Fahrzeugs montiert ist und daß die Armaturentafel, bestückt mit Bauelementen, Baugruppen und/oder Aggregaten sowie mit Bedien- und Anzeigeelementen, als Armaturentafelmodul (27) vorgefertigt in einem die Fahrgastzelle (2) bildenden Teil einer Karosserie des Fahrzeugs montiert ist.

2. Kraftfahrzeug nach Anspruch 1, **dadurch gekennzeichnet**, daß der Wasserkasten bis in den Bereich einer unterhalb der Fahrgastzelle (2) und des Motorraums (1) verlaufenden Rahmenstruktur reicht.

3. Kraftfahrzeug nach zumindest einem der Ansprüche 1 oder 2, **dadurch gekennzeichnet,** daß eine vordere Wand (12) des Wasserkastens im oberen Bereich eine Dichtung (18) trägt, an der die geschlossene Motorhaube in an sich bekannter Weise anliegt.

4. Kraftfahrzeug nach Anspruch 1 bis 3, **dadurch gekennzeichnet**, daß einige Bauelemente, Baugruppen und/oder Aggregate des Fahrzeugs durch Wandungen (12, 13) des Wasserkastens hindurch in den Motorraum (1) und/oder die Fahrgastzelle (2) ragen bzw. motorraumseitig und/oder fahrgastzellenseitig an der jeweiligen Wandung (12, 13) gehaltert sind.

5. Kraftfahrzeug nach zumindest einem der Ansprüche 1 bis 4, **dadurch gekennzeichnet**, daß ein Bremsgerät (19), welches von der Fahrgastzelle (2) über ein Pedal bedienbar ist, im Wasserkasten angeordnet ist.

6. Kraftfahrzeug nach Anspruch 5, **dadurch gekennzeichnet**, daß das Bremsgerät (19) in an sich bekannter Weise rotationssymmetrisch gestaltete Bauelemente aufweist und das Bremsgerät (19) mit etwa quer zur Fahrtrichtung des Kraftfahrzeugs ausgerichteter Symmetrieachse (25) im Wasserkasten angeordnet ist.

7. Kraftfahrzeug nach zumindest einem der Anspruch 1 bis 6, **dadurch gekennzeichnet,** daß der Wasserkasten eine U- oder V-förmige Querschnittsstruktur hat, wobei Wandungen (12, 13) des Wasserkastens erkerförmige Ausbuchtungen in Richtung der Fahrgastzelle (2), des Motorraumes (1) oder des Wasserkasteninneren aufweisen können.

8. Kraftfahrzeug nach zumindest einem der Ansprüche 1 bis 7, **dadurch gekennzeichnet,** daß das Wasserkastenmodul (11) eine vordere Wandung (12) zum Motorraum (1) und eine hintere Wandung (13) zu der Fahrgastzelle (2) sowie gegebenenfalls eine Bodenwandung zur Bildung eines im wesentlichen V- oder gegebenenfalls U-förmigen Wasserkastens aufweist, wobei an den Wandungen (12, 13) die weiteren Modulkomponenten gehaltert sind.

9. Kraftfahrzeug nach zumindest einem der Ansprüche 1 bis 8, **dadurch gekennzeichnet**, daß sich das Wasserkastenmodul (11) über annähernd die gesamte Fahrzeugbreite erstreckt, wobei der Wasserkasten seitlich offen ausgebildet ist, Wandungen (12, 13) des Wasserkastens seitlich an der Karosserie zu haltern sind und damit der Wasserkasten auch seitlich verschlossen wird.

10. Kraftfahrzeug nach zumindest einem der Ansprüche 1 bis 9, **dadurch gekennzeichnet**, daß das Wasserkastenmodul (11) einen unteren Flansch aufweist, der mit einer Rahmenstruktur des Fahrzeugs verbindbar ist.

11. Kraftfahrzeug nach zumindest einem der Ansprüche 1 bis 10, **dadurch gekennzeichnet,** daß am Armaturentafelmodul (27) zumindest ein Bereich zur Anlage an dem Wasserkastenmodul (11) vorgesehen ist, wobei in dem Anlagebereich des Armaturentafelmoduls (27) und des Wasserkastenmoduls (11) jeweils Luftführungskanäle (28, 39) enden, die bei Kontakt der Module (11, 27) miteinander verbunden sind.

## Claims

1. Motor vehicle with an engine compartment (1) arranged in front of a passenger compartment (2), an engine bonnet, an instrument panel and with a radiator tank arranged in front of the instrument panel and covered by the engine bonnet at least in some regions, characterised in that the radiator tank extends from the region of the closed engine bonnet so far downwards that it forms a double-walled partition between passenger compartment (2) and engine compartment (1) and hence a separate dividing compartment (10), in that the radiator tank, equipped with components, subassemblies and/or assemblies of the vehicle, is prefabricated as a radiator tank module (11) and assembled in a body of the vehicle and in that the instrument panel, equipped with components, subassemblies and/or assemblies and with control and indicating elements, is prefabricated as an instrument panel module (27) and assembled in a portion of a body of the vehicle forming the passenger compartment (2).

2. Motor vehicle according to claim 1, characterised in that the radiator tank extends into the region of a frame structure running below the passenger compartment (2) and engine compartment (1).

3. Motor vehicle according to one or more of claims 1 or 2, characterised in that a front wall (12) of the radiator tank in the upper region carries a seal (18) against which the closed engine bonnet abuts in a manner known in the art.

4. Motor vehicle according to claims 1 to 3, characterised in that some components, subassemblies and/or assemblies of the vehicle extend through walls (12, 13) of the radiator tank into the engine compartment (1) and/or the passenger compartment (2) or are supported on the respective wall (12, 13) on the engine compartment side and/or passenger compartment side.

5. Motor vehicle according to one or more of claims 1 to 4, characterised in that a brake unit (19) which can be controlled by a pedal from the passenger compartment (2) is arranged in the radiator tank.

6. Motor vehicle according to claim 5, characterised in that the brake unit (19) in a manner known in the art comprises rotationally symmetrically designed components and the brake unit (19) is arranged in the radiator tank with the axis of symmetry (25) oriented approximately transversely to the direction of travel of the motor vehicle.

7. Motor vehicle according to one of more of claims 1 to 6, characterised in that the radiator tank has a U-shaped or V-shaped cross-sectional structure, wherein walls (12, 13) of the radiator tank can have oriel-like indentations in the direction of the passenger compartment (2), the engine compartment (1) or the radiator tank interior.

8. Motor vehicle according to one or more of claims 1 to 7, characterised in that the radiator tank module (11) comprises a front wall (12) to the engine compartment (1) and a rear wall (13) to the passenger compartment (2) and if occasion arises a bottom wall to form an essentially V-shaped or if occasion arises U-shaped radiator tank, wherein the additional module components are supported on the walls (12, 13).

9. Motor vehicle according to one or more of claims 1 to 8, characterised in that the radiator tank module (11) extends over approximately the whole width of the vehicle, wherein the radiator tank is open at the sides, walls (12, 13) of the radiator tank are to be supported laterally on the vehicle body and hence the radiator tank is also closed at the sides.

10. Motor vehicle according to one or more of claims 1 to 9, characterised in that the radiator tank module (11) comprises a lower flange which can be connected to a frame structure of the vehicle.

11. Motor vehicle according to one or more of claims 1 to 10, characterised in that on the instrument panel module (27) is provided at least one region for contact with the radiator tank module (11), wherein ending in the region of contact of the instrument panel module (27) and the radiator tank module (11) are in each case air conducting channels (28, 39) which are connected to each other on contact of the modules (11, 27).

## Revendications

1. Véhicule automobile comportant un compartiment moteur (1) disposé devant un habitacle (2), un capot moteur, une planche de bord ainsi qu'un collecteur-déflecteur d'eau qui est disposé devant la planche de bord et est au moins partiellement couvert par le capot moteur, caractérisé par le fait que le collecteur-déflecteur d'eau s'étend vers le bas, à partir de la zone fermée par le capot moteur, avec une longueur telle qu'il forme une séparation à double paroi entre l'habitacle (2) et le compartiment moteur (1) et ainsi un volume de séparation distinct, par le fait que le collecteur-déflecteur d'eau équipé d'éléments de construction, de composants et/ou d'ensembles du véhicule est monté sous une forme préfabriquée, en tant que module de collecteur-déflecteur d'eau (11), dans une carrosserie du véhicule et par le fait que la planche de bord, équipée d'éléments de construction, de composants et/ou d'ensembles ainsi que d'éléments de commande et d'affichage est montée sous une forme préfabriquée en tant que module de planche de bord (27) dans une partie d'une carrosserie du véhicule formant l'habitacle (2).

2. Véhicule automobile selon la revendication 1, caractérisé par le fait que le collecteur-déflecteur d'eau s'étend jusque dans la région d'une structure de châssis située au-dessous de l'habitacle (2) et du compartiment moteur (1).

3. Véhicule automobile selon au moins une des revendications 1 ou 2, caractérisé par le fait qu'une paroi antérieure (12) du collecteur-déflecteur d'eau porte dans sa partie supérieure un joint (18) contre lequel le capot moteur fermé vient en appui d'une manière connue en soi.

4. Véhicule automobile selon les revendications 1 à 3, caractérisé par le fait que certains éléments de construction, composants et/ou ensembles du véhicule font saillie au travers de parois (12, 13) du collecteur-déflecteur d'eau dans le compartiment moteur (1) et/ou dans l'habitacle (2) et sont fixés à la paroi concernée, côté compartiment moteur et/ou côté habitacle.

5. Véhicule automobile selon au moins une des revendications 1 à 4, caractérisé par le fait qu'un appareil de freinage (19) qui peut être actionné depuis l'habitacle (2) au moyen d'une pédale est disposé dans le collecteur-déflecteur d'eau.

6. Véhicule automobile selon la revendication 5, caractérisé par le fait que l'appareil de freinage (19) comporte de manière connue en soi des éléments de construction symétriques de révolution et que l'appareil de freinage (19) est disposé dans le collecteur-déflecteur d'eau avec son axe de symétrie (25) dirigé transversalement à la direction de déplacement du véhicule automobile.

7. Véhicule automobile selon au moins une des revendications 1 à 6, caractérisé par le fait que le collecteur-déflecteur d'eau présente en section transversale une structure en U ou en V, les parois (12, 13) du collecteur-déflecteur d'eau pouvant comporter des parties embouties en forme d'encorbellements tournées vers l'habitacle (2), vers le compartiment moteur (1) ou vers l'intérieur du collecteur-déflecteur d'eau.

8. Véhicule automobile selon au moins une des revendications 1 à 7, caractérisé par le fait que le collecteur-déflecteur d'eau (11) comporte une paroi antérieure (12) côté compartiment moteur (1) et une paroi postérieure (13) côté habitacle et éventuellement une paroi de fond pour former un collecteur-déflecteur d'eau essentiellement en forme de V ou éventuellement en forme de U, les autres composants de module étant fixés aux parois (12, 13).

9. Véhicule automobile selon au moins une des revendications 1 à 8, caractérisé par le fait que le module de collecteur-déflecteur d'eau (11) s'étend sur approximativement toute la largeur du véhicule, le collecteur-déflecteur d'eau étant ouvert sur le côté, les parois (12, 13) du collecteur-déflecteur d'eau étant fixées sur le côté à la carrosserie et le collecteur-déflecteur d'eau étant ainsi fermé sur les côtés également.

10. Véhicule automobile selon au moins une des revendications 1 à 9, caractérisé par le fait que le module de collecteur-déflecteur d'eau (11) comporte un bord de fixation inférieur qui peut être fixé à une structure de châssis du véhicule.

11. Véhicule automobile selon au moins une des revendications 1 à 10, caractérisé par le fait que le module de planche de bord (27) comporte au moins une zone destinée à venir en appui sur le collecteur-déflecteur d'eau (11), des canaux d'alimentation en air (28, 39) qui sont connectés entre eux lorsque les modules (11, 27) sont en contact débouchant dans la zone d'appui du module de planche de bord (27) et du module de collecteur-déflecteur d'eau (11).
